(19) Europäisches Patentamt
European Patent Office
Office européen des brevets

(11) Publication number: 0 113 658
B1

# (12) EUROPEAN PATENT SPECIFICATION

(45) Date of publication of patent specification: 04.11.87

(51) Int. Cl.⁴: **C 08 F 6/08**, C 08 F 38/02

(21) Application number: 84100035.9

(22) Date of filing: 03.01.84

## (54) Process for the purification of acetylene polymers.

(30) Priority: 06.01.83 JP 233/83
25.01.83 JP 9424/83
02.06.83 JP 96955/83

(43) Date of publication of application:
18.07.84 Bulletin 84/29

(45) Publication of the grant of the patent:
04.11.87 Bulletin 87/45

(84) Designated Contracting States:
BE DE FR GB IT NL

(58) References cited:
FR-A-1 363 804

CHEMICAL ABSTRACTS, vol. 92, no. 8, Februar 1980, page 16, no. 59445b, Columbus, Ohio, USA

(73) Proprietor: SHOWA DENKO K.K.
13-9, Shiba Daimon 1-chome
Minato-ku, Tokyo 105 (JP)

(72) Inventor: Naito, Kazumi
1151-2, Harajuku-cho Totsuka-ku
Yokohama-shi Kanagawa (JP)
Inventor: Kawakami, Soichiro
No. 95-1, Kitaya-cho Nakahara-ku
Kawasaki-shi Kanagawa (JP)
Inventor: Kira, Masaaki
No. 3-2-224, Shiomidai Isogo-ku
Yokohama-shi Kanagawa (JP)
Inventor: Kobayashi, Yukio
No. 4-19-14, Tamagawa
Setagaya-ku Tokyo (JP)

(74) Representative: Henkel, Feiler, Hänzel & Partner
Möhlstrasse 37
D-8000 München 80 (DE)

EP 0 113 658 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

## FIELD OF THE INVENTION

The present invention relates to a process for the purification of acetylene polymers. More particularly, the present invention relates to a process for the purification of acetylene polymers wherein polymerization catalyst is removed from the acetylene polymers by contacting them with organic acids.

## BACKGROUND OF THE INVENTION

It is known that acetylene polymers containing a conjugated double bond chain, which are produced by polymerizing acetylene compounds in the presence of a Ziegler-Natta catalyst comprising a transition metal compound and an organoaluminum compound, are useful organic semiconductor materials for electric and electronic elements since electrical conductances of the polymers are within the semiconductor region.

It is also known that the electrical conductance of acetylene polymers can be controlled appropriately within a wide range of from $10^{-9}$ to $10^{3}$ $\Omega^{-1}.cm^{-1}$ by chemically doping films of the acetylene polymers with electron-receiving compounds such as $I_2$, $Cl_2$, $Br_2$, ICl, IBr, $AsF_5$, $SbF_5$ and $PF_5$, or electron-donating compounds such as Na, K and Li (see *J.C.S. Chem. Commu.*, 578 (1977), *Phys. Rev. Lett., 39,* 1098 (1977), *J. Am. Chem. Soc., 100,* 1013 (1978), and *J. Chem. Phys., 69,* 5098 (1978)).

As a result, acetylene polymers are expected to be used not only as semiconductor materials, but also as antistatic agents for synthetic substances, materials for use in the fabrication of solar batteries, batteries (primary or secondary), and electric or magnetic switches, and in the conversion or fixation of beams, or as electric memory materials.

Acetylene polymers containing a conjugated double bond chain are produced by polymerizing acetylene compounds in the presence of polymerization catalysts such as Ziegler-Natta catalyst, a Luttinger catalyst and a Metathesis catalyst. These catalysts, however, are difficult to remove from the acetylene polymers since they contain transition metals such as Ti, V, Cr, Co, W and Mo, or metals such as Al and Zn, and acetylene polymers are generally insoluble in solvents.

Various methods have heretofore been used to remove the catalyst from acetylene polymers, including (1) washing repeatedly the polymers formed with polymerization solvents or inert solvents, and (2) washing the polymers formed with inorganic acids such as hydrochloric acid, nitric acid and phosphoric acid, or mixtures of the acids and organic solvents.

Method (1), however, needs to be performed repeatedly and thus requires a lot of time for catalyst removal. Furthermore, the catalyst removal efficiency of this method is not satisfactory. For example, toluene can be used in the removal of a polymerization catalyst from the acetylene polymers. Toluene, however, is not a satisfactory solvent for use in the removal of polymerization catalyst since only a very limited amount of catalyst can be removed even if the process of removal is performed using a large amount of toluene and further if the process of removal is conducted over a long period of time.

In Method (2), a reaction (doping) occurs between the inorganic acids and the acetylene polymers, and furthermore the catalyst removal efficiency of this method is not sufficiently satisfactory. This method, e.g., as described in Japanese Patent Application (OPI) No. 164109/82 (the term "OPI" as used herein refers to a "published unexamined Japanese patent application"), however, is not suitable for practical use since an extensive amount of time is required and it is not suitable for use where the acetylene polymer is in the form of a film. Moreover, doping of the polyacetylene by the inorganic acids such as hydrochloric acid, sulfuric acid, nitric acid and phosphoric acid occurs, causing changes in the structure of polyacetylene and making the polyacetylene unsuitable for use as electrically conductive material.

The residual catalyst seriously influences the stability of acetylene polymers and thus a significant subject for one engaged in this field has been to reduce the amount of the residual catalyst.

Insufficient catalyst removal produces disadvantages in that (1) the acetylene polymers are readily subject to oxidation and degradation, (2) the electric conductance is low, (3) the electric conductance after doping is also low, and (4) when the acetylene polymers are used as electrodes, the performance of the resulting final battery is low.

## SUMMARY OF THE INVENTION

As a result of extensive investigations to reduce the amount of the residual catalyst in acetylene polymers, it has now been found that the residual catalyst which is bonded to the acetylene polymer chain can be effectively removed by contacting with a compound having properties to react with the catalyst bonded to thereby render the catalyst more soluble and that an organic acid possesses such properties. This catalyst removal can be attained in a short time and further using very small amounts of organic acids.

The present invention thus provides in a first embodiment a process for the purification of acetylene polymers, comprising removing polymerization catalyst from acetylene polymers by contacting the polymers with an organic acid.

In a second embodiment the invention provides a method for purifying acetylene polymers by contacting the polymers with an organic acid by pulverizing the acetylene polymers in admixture with an organic acid, and this can be attained in short time and further using small amounts of organic acid.

The present invention thus provides in a third embodiment a process for the purification of acetylene

polymers, comprising contacting the acetylene polymers with an organic acid by washing the acetylene polymers with an organic acid under reflux conditions while stirring the polymers therein.

BRIEF DESCRIPTION OF THE DRAWING

The Figure is a schematic cross sectional view of a battery cell for the measurement of the characteristics of a button type battery, as described hereinafter wherein:

1 is a container, 2 is a negative electrode, 3 is a membrane, 4 is a felt, 5 is a positive electrode, 6 is a porous Teflon sheet, 7 is a Teflon container, 8 is a Teflon ring, and 9 is an Ni lead wire.

DETAILED DESCRIPTION OF THE INVENTION

The present invention has been achieved by the findings that organic acids react with the residual catalyst bonded to the acetylene polymer chain to render the catalyst-bonded acetylene polymer more soluble so that the residual catalyst can be effectively removed. For example, the organic acid (RCOOH) reacts with polyacetylene produced using tetrabutyl titanate as a polymerization catalyst as follows:

$$\text{Polyacetylene—Ti(OBu)}_3 + \text{RCOOH} \rightarrow \text{Polyacetylene-}\underset{\substack{|\\ \text{OCOR}}}{\text{Ti}}\text{(OBu)}_2 + \text{BuOH}$$

When the organic acid is acetic acid, 4 wt% of the reaction product, [Polyacetylene-Ti$(OBu)_2(OCOCH_3)$], is dissolved in acetic acid. On the other hand, organic compounds conventionally used in the catalyst removal from polyolefins and acetylene polymers such as toluene and alcohols, however, do not react with the catalyst-bonded polyacetylene to render it soluble. For example, toluene does not react with the catalyst-bonded polyacetylene, [Polyacetylene-Ti$(OBu)_3$], and dissolves only 0.07 wt% of the catalyst-bonded polyacetylene. Thus, by contacting acetylene polymers with an organic acid the amount of the residual catalyst in the acetylene polymers can be greatly reduced.

This decrease in the amount of the residual catalyst leads to a reduction in the decomposition or degradation of acetylene polymers. Furthermore, the decrease results in an increase in the mechanical strength of the acetylene polymer, and it is expected that the change in electrical conductivity with time due to decomposition or degradation of the polymer can be greatly reduced.

The thus-purified acetylene polymers are quite advantageous when used in the fabrication of solar batteries, primary batteries, and secondary batteries, or as photoconductive materials. For example, when used in the fabrication of primary batteries, advantages occur in that (1) the discharge capacity is great, (2) the voltage constancy is good, and (3) self-discharge is low. On the other hand, when used in the fabrication of secondary batteries, advantages occur in that (1) the energy density is high, (2) the voltage constancy is good, (3) self-discharge is low, and (4) cycle life for repeated use is long.

When, however, acetylene polymers purified with inorganic acids are used in the fabrication of primary and secondary batteries, the advantages as described above cannot be obtained since doping by the inorganic acids occurs. In particular, the advantage (4), long cycle life for repeated use, as obtained in the fabrication of secondary batteries cannot be obtained.

The manner in which contact of the organic acids and acetylene polymers is achieved is not critical in the invention; i.e., any suitable manner for contact can be used. When, however, acids which are solid at the temperatures at which the contacting occurs, i.e., temperatures at which they are contacted with the acetylene polymers, are used, Solvent (I) as described below must be used in combination with the acid. In the case of other acids, Solvent (I) may be used in combination with the acid, if desired. After the removal of the polymerization catalyst, the acetylene polymers are preferably washed with Solvent (II) as described below to remove the acids. Solvents (I) and (II) may be the same or different.

The term "acetylene polymer(s)" as used herein includes both polymers having the recurring unit represented by the Formula (A) as described below, and copolymers of two or more monomers, containing the recurring unit represented by the Formula (A),

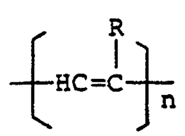

(A)

wherein R is a hydrogen atom, a halogen atom, an alkyl group containing 6 or less carbon atoms, or an aryl group containing from 6 to 10 carbon atoms.

Typical examples of acetylene polymers to which the present invention is applicable include polymers derived from acetylene, phenylacetylene, methylacetylene, hexylacetylene, butylacetylene, naphthylacetylene, chloroacetylene and bromoacetylene. The effect of the invention can be obtained efficiently particularly when polyacetylene is used. The acetylene polymers are preferably in a powder form or in a lump form (including a short fibrous form having a fiber length of 1 mm or less). Of these, highly crystalline acetylene polymers having a fibrous fine crystalline structure are particularly preferred. If the acetylene polymers are in a film form, the catalyst present in the interior of the film is difficult to remove

and a long period of time is required for the removal of the catalyst. The form is not suitable for practical use.

The acetylene polymer as used herein is different from the film-formed acetylene polymers as described in Japanese Patent Publication No. 32581/73, and the polymers which can be used mean a polymer purified in accordance with this invention and converted to a powdered or powdery, gelatinated or gelatinous, or swollen form as described in, for example, Japanese Patent Application (OPI) Nos. 129404/80, 128419/80, 142030/80, 145710/80, 145711/80, 10428/81, 133133/81, 115305/81, Japanese Patent Application Nos. 147717/82, 84145/83, *Trans. Frady Soc., 64,* 823 (1968), *Makromol. Chem., Rapid. Comm., 1,* 621 (1980), *J. Chem. Phys., 69,* (1), 106 (1978), Japanese Patent Application (OPI) Nos. 53509/82, 61008/82, 174340/82, 174351/82, 72421/83 and 74706/83.

The above-described gelatinated or swollen acetylene polymer is in the state that acetylene polymer fibrilis insoluble in an organic solvent are intertwined with each other and swollen in an organic solvent and thus the polymer is substantially different from the usual cross-linked polymer gel. The powdery acetylene polymer is included in the gelatinized or swollen acetylene polymer and can be produced by drying the gelatinized or swollen acetylene polymer.

The acetylene polymer which has been purified according to the process of the present invention is preferably a purified powdery acetylene polymer containing an organic solvent or an acetylene polymer swollen with an organic solvent. The advantages in use of this polymer in producing secondary batteries cannot be obtained sufficiently if the acetylene polymer is dried prior to the purification with the organic acid.

FR—A—1363804 is directed to the removal of catalyst from polyolefins such as for example plyethylene. These polyolefins differ in their chemical and physical properties considerably from acetylene polymers which are particularly insoluble in organic solvents. A purification of these acetylene polymers in the manner proposed in FR—A—1363804, which relates to the treatment of a polyolefin solution is therefore not possible.

The process of the invention can be applied very effectively to the acetylene polymers produced by the use of the Ziegler-Natta catalyst, Luttinger catalyst, and Metathesis catalyst, particularly to those polymers produced by the use of the Ziegler-Natta catalyst.

These catalysts comprise a transition metal compound and an organometallic compound. The transition metal compounds contain at least one transition metal of Groups IVa, Va, VIa and VIII of the periodic table, including compounds of titanium, vanadium, chromium, iron, cobalt, tungsten and molybdenum which have a halogen atom or an alkyl group, alkenyl group, aryl group, aralkyl group, alkoxide group, phenoxide group or carboxylic acid residue each having at most 20 carbonatoms, a cyclopentadiethyl group, an acetylacetone residue or carbon monoxide (carbonyl group), and complexes of these compounds with electron donor compounds such as pyridine, triphenylphosphine and dipyridyl.

Among the transition metal compounds, titanium, vanadium, iron, chromium and cobalt compounds are preferred, and the titanium compounds are especially preferred.

Transition metal compounds represented by the following general formulae may be cited as typical examples of the preferred transition metal compounds:

$$Ti(OR)_4$$

$$M(acac)_3$$

$$MO(acac)_2$$

wherein R represents an alkyl or aryl group having at most 20 carbon atoms, (acac) represents an acetylacetonate group, and M represents a transition metal, titanium, vanadium, chromium or cobalt.

Typical examples of the transition metal compounds include tetramethoxy titanium, tetraethoxy titanium, tetra-n-propoxy titanium, tetraisopropoxy titanium, tetra-n-butoxy titanium, tetraisobutoxy titanium, tetraoctadecyloxy titanium, tetraphenoxy titanium, triacetylacetonatotitanium, trisacetylacetonatovanadium, trisacetylacetonatoiron, trisacetylacetonatochromium, trisacetylacetonatocobalt, titanium oxyacetylacetonate and vanadium oxyacetylacetonate.

The organometallic compounds have at least one metal selected from metals of Groups IIa, IIb, IIIb and IVb of the periodic table. Some of such compounds are represented by the following formula

$$MR_n$$

wherein M represents a metal of Group IIa, IIb, IIIb or IVb of the periodic table, R represents a hydrogen atom, a halogen atom, or an organic group selected from the group consisting of alkyl group, alkenyl group, aryl group, aralkyl group, alkoxide group, a phenoxy group and a cyclopentadienyl group having up to 20 carbon atoms, two or more R's may be identical or different but at least one of them is a hydrogen atom or the organic group, and n is a positive integer equal to or smaller than the maximum atomic valence of the metal.

Examples of the other organometallic compounds are complexes of the above organometallic

compounds with an equimolar proportion of pyridine, triphenylphosphine or diethylether, the reaction products formed between 1 mole of the above organometallic compounds and at most 2.0 moles of water, and double salts of two of the above organometallic compounds.

Examples of the organometallic compounds include organometallic compounds having magnesium, calcium, zinc, boron, aluminum, potassium, silicon and tin. The organometallic compounds of magnesium, zinc, aluminum and tin are preferred, and the organoaluminum compounds are especially preferred. Typical examples of the organoaluminum compounds are triethyl aluminum, triisobutyl aluminum, trihexyl aluminum, diethyl aluminum chloride, di-n-butyl aluminum chloride, ethyl aluminum sesquichloride, diethyl aluminum butoxide and the reaction product of triethyl aluminum and water (in a mole ratio of 1:0.5). Aluminum-siloxalene compounds, aluminum-amide compounds, dialumoxalene compounds and double salts containing the aforesaid organoaluminum compounds can also be used.

Acetylene polymers which can preferably be used in the present invention can be obtained by polymerizing acetylene monomers in the presence of the catalysts with stirring wherein the concentration of transition metal compound is from 0.0001 to 0.1 mol per liter of polymerization solvent and the molar ratio of aluminum to transition metal is from 1/1 to 15/1.

Acids which can be used in the embodiments of the invention include acids and acid anhydrides such as mono- or multivalent carboxylic acid anhydrides such as acetic anhydride, phthalic anhydride, maleic anhydride and succinic anhydride, mono- or multivalent unsaturated acids such as maleic acid, acrylic acid, crotonic acid, and oleic acid, mono- or multivalent aromatic acids such as benzoic acid, naphthoic acid, phthalic acid and salicylic acid, mono- or multivalent saturated fatty acids such as acetic acid, propionic acid, butyric acid, lactic acid, succinic acid, formic acid, and benzylic acid, sulfonic acid compounds such as benzenesulfonic acid, and oxalic acid compounds such as oxalic acid and monoethyl oxalate. These acids can be used alone or in combination with each other. Preferred examples are mono- and multivalent saturated fatty acids or acid anhydrides. Particularly preferred are acetic acid, acetic anhydride and hydroxycarboxylic acids (oxy acids). Typical examples of the oxy acids are α-oxy acids such as glycolic acid, lactic acid, tartaric acid, malic acid, glyceric acid and aldonic acid.

Solvents (I) and (III) as used in the embodiments of this invention are not limited; any solvents can be used in the process of the invention as long as the solvents do not dissolve the acetylene polymers. Usually water and organic solvents are used. Suitable organic solvents which can be used include aromatic compounds such as benzene, toluene, xylene, decalin and tetralin; halogenated compounds such as chlorobenzene, dichlorobenzene, chloroform, carbon tetrachloride and trichloroethane; alcohol compounds such as methyl alcohol, ethyl alcohol and isobutyl alcohol; ketone compounds such as acetone, methyl ethyl ketone, acetylacetone and cyclohexanone; aliphatic compounds such as hexane and heptane; alicyclic compounds such as cyclohexane and methylcyclohexane; sulfolane compounds such as sulfolane, 3-methyl sulfolane and 3-ethyl sulfolane; nitro compounds such as nitrobenzene; ether compounds such as tetrahydrofuran, 2,5-dimethyltetrahydrofuran, and diethyl ether; cyano comounds such as acetonitrile; aromatic ethers such as anisole and phenetole; esters such as ethyl acetate and ethyl benzoate; Cellosolves; monoglyme and diglyme; and ethylene carbonates or propylene carbonates. These organic solvents can be used alone or in combination with each other.

The ratio of the organic acid to the acetylene polymers is not critical in the invention and can be varied depending on the form of the acetylene polymers, the type and amount of the catalyst residual, the type of the organic acid, the contacting time, i.e., the time during which the acid is contacted with the acetylene polymers, and so forth. The optimum ratio can be easily determined by routine experimentation. In general, the organic acid is used in an amount of from 0.1 to 1,000 parts by weight, preferably from 0.1 to 500 parts by weight, per part by weight of the polymer. If solid acids are used, solvents capable of dissolving the solid acids must be used. With other acids, such solvents do not always have to be used. In many cases, however, the use of such solvents is preferred to facilitate the subsequent acid removal or from an economic standpoint.

The contacting time of the organic acid with the acetylene polymers varies with the form of the acetylene polymers, the type and amount of the residual catalyst, or with the amount of the organic acid used. In general, however, a suitable contacting time can range from 1 minute to 10 hours.

The contacting temperature is not specially limited as long as it is below the decomposition temperatures (about 400°C) of the acetylene polymers.

In accordance with the second embodiment of this invention, a mixture of the acetylene polymers and organic acids is pulverized. This pulverization is generally sufficient to be performed by the use of machines such as a ball mill, an oscillating ball mill, an impact pulverizer, and a colloid mill. In the case of polymers (e.g., polyacetylene) which are degraded when treated in the air, it is necessary for the pulverization to be performed in an atmosphere of an inert gas (e.g., nitrogen and argon). In this pulverization process, the use of Solvent (I) as described above is not essential, but in many cases it is preferred since the acetylene polymers can be uniformly contacted with the organic acids.

The pulverization temperature is not critical and is usually within the range of from 0 to 50°C. The pulverization time cannot be determined unconditionally since it varies with the type of the pulverizing machine, the type and amount of the acetylene polymer, and the type and amount of each of the acid and solvent. However, in general, a suitable pulverization time ranges from 1 minute to 48 hours.

In the third embodiment of the process of this invention, the reflux can be carried out under

atmospheric pressure or reduced pressure with stirring, and can be performed in any suitable manner conventional in the art.

The purified acetylene polymer can be subsequently washed with one of the solvents listed above, if desired, to remove any organic acid remaining.

The acetylene polymers purified by the embodiments of the process of this invention are particularly useful in producing acetylene polymer moldings for a secondary battery, e.g., for a positive electrode and/or a negative electrode thereof.

The secondary battery produced using acetylene polymer purified by the process of this invention has advantages over conventional secondary batteries in that the number of cycles is great and self-discharge is low.

Although the exact reason why a battery with an electrode made of an acetylene polymer purified with an organic acid as in this invention exhibits high performance is not known at present, it is assumed that (1) the purification decreases the amount of the residual catalyst, (2) the purification removes low molecular weight acetylene polymers, and (3) the organic acid is adsorbed onto the surface of acetylene polymers to prevent the degradation of the polymer.

The acetylene polymer is molded under pressure in the presence or absence of an organic solvent, e.g., one or more of the solvents described above. This mold is used as an electrode for batteries. Press molding in the presence of an organic solvent produces a mold having an increased mechanical strength, which is more preferred for use as an electrode for batteries.

In the secondary battery, the mold of the acetylene polymer purified with the organic acid is used in the following manners:

(1) Type (1): a positive electrode alone is made of the acetylene polymer;

(2) Type (2): a negative electrode alone is made of the acetylene polymer; and

(3) Type (3): both positive and negative electrodes are made of the acetylene polymer.

In Type (1) above, the negative electrode may be made of light metals such as lithium, sodium and aluminum; interlaminar componds such as graphite, carbon fiber and $TiS_2$; or conjugated polmeric compounds other than the acetylene polymer.

In Type (2) above, the positive electrode may be made of conjugated polymeric compounds other than the acetylene polymer. Suitable conjugated polymeric compounds include poly(p-phenylene), poly(m-phenylene), polypyrrole, poly(2,5-thienylene), poly(3-methyl-2,5-thienylene), polyphenyl sulfide, polyphenyl acetylene, polyarylene quinones, polyazophenylene, poly(Schiff base), polyamino quinones, polybenzimidazoles, poly(2,3-dimethylenequinone), electrically active polymers as described in Japanese Patent Application (OPI) No. 195731/82 and EP—67,444, and thermal decomposition products of polyimides, polyacrylonitrile and poly)α-cyano acryl). Typical examples of polyarylene quinones, polyazophenylene, poly(Schiff base), polyamino quinones, and polybenzimidazoles among the above-described conjugated polymeric compounds are the described in J. E. Katon ed. (translated by H. Tsuchida), *Kobunshi Yuki Handotai,* Shokodo Co. (1972), pages 87—112.

Of the above-described conjugated polymeric compounds, poly(p-phenylene), poly(2,5-thienylene), poly(3-methyl-2,5-thienylene) and polypyrrole are preferred.

These conjugated polymeric compounds can be used in any suitable form, such as in the form of film, powder or short fiber.

In the production of the battery electrode, suitable electrically conductive materials such as graphite, carbon black, acetylene black, metal powders, and carbon fiber may be added to the acetylene polymer and conjugated polymeric compounds. Also, a metal net, for example, may be incorporated in the electrode as a current-collecting material. In addition, thermoplastic resins such as polyethylene, modified polyethylene and polytetrachloroethylene may be added as a reinforcing material.

In the production of the electrode, positive or negative electrode of the secondary battery of the invention, as well as the acetylene polymer and the conjugated polymeric compounds, electrically conductive acetylene polymers and other conjugated polymeric compounds produced by doping with a dopant can be used.

Either chemical doping and electrochemical doping can be employed in the doping of the acetylene polymer and other conjugated polymereic compounds.

As dopants for use in chemical doping, various electron-accepting and electron-donating compounds which are known, such as (I) halogens such as iodine, bromine and bromoiodide, (II) metal halides such as arsenic pentafluoride, antimony pentafluoride, silicon tetrafluoride, phosphorus pentachloride, phosphorus pentafluoride, aluminum chloride, aluminum bromide and aluminum fluoride; (III) proton acids such as sulfuric acid, nitric acid, fluorosulfuric acid, trifluoromethane-sulfuric acid and chlorosulfuric acid; (IV) oxidants such as sulfur trioxide, nitrogen dioxide and difluorosulfonyl peroxide; (V) $AgClO_4$; and (VI) tetracyanoethylene, tetracyanoquinodimethane, chloranil, 2,3-dichloro-5,6-dicyano-p-benzoquinone and 2,3-dibromo-5,6-dicyano-p-benzoquinone, can be used.

Dopants which can be used in electrochemical doping include (i) anion dopants such as anions of halides of Group Va metals, such as $PF_6^-$, $SbF_6^-$, $AsF_6^-$ and $SbCl_6^-$; anions of halides of Group IIIa, such as $BF_4^-$; halogen anions such as $I^-(I_3^-)$, $Br^-$ and $Cl^-$; and perchloric acid anions such as $ClO_4^-$ (which are effective as dopants to produce p-type electrically conductive acetylene and other conjugated polymers), and (ii) cation dopants such as alkali metal ions, such as $Li^+$, $Na^+$ and $K^+$; and quaternary ammonium ions

such as $R_4N^+$ (wherein R is a hydrocarbon group containing from 1 to 20 carbon atoms) (which are effective as dopants to produce n-type electrically conductive acetylene and other conjugated polymers).

Typical compounds which produce the above-described cation and anion dopants are shown below for exemplification:

$LiPF_6$, $LiSbF_6$, $LiAsF_6$, $LiClO_4$, NaI, $NaPF_6$, $NaSbF_6$, $NaSsF_6$, $NaClO_4$, KI, $KPF_6$, $KSbF_6$, $KAsF_6$, $KClO_4$, $(n\text{-}Bu)_4N^+\cdot(AsF_6)^-$, $(n\text{-}Bu)_4N^+\cdot(PF_6)^-$, $(n\text{-}Bu)_4N^+\cdot ClO_4^-$, $LiAlCl_4$, $LiBF_4$, $NO_2\cdot BF_4$, $NO\cdot BF_4$, $NO_2\cdot AsF_6$, $NO\cdot AsF_6$, $NO_2\cdot ClO_4$, and $NO\cdot ClO_4$.

These dopants can be used singly or as a mixture comprising two or more thereof.

In addition to the above-described anion dopants, $HF_2^-$ can be used.

As cation dopants, other than the above-described cation dopants, the following can be used.

Pyrylium or pyridinium cations represented by the formula (I):

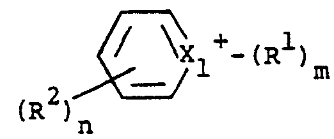

wherein $X_1$ is an oxygen atom or a nitrogen atom, $R^1$ is a hydrogen atom, an alkyl group containing from 1 to 15 carbon atoms, or an aryl group containing from 6 to 15 carbon atoms, $R^2$ is a halogen atom, an alkyl group containing from 1 to 10 carbon atoms, or an aryl group containing from 6 to 15 carbon atoms, m is 0 when $X_1$ is an oxygen atom, or 1 when $X_1$ is a nitrogen atom, and n is 0 or an integer of from 1 to 5.

Carbonyl cations represented by the formula (II) or (III):

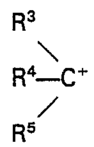 (II)

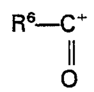 (III)

wherein $R^3$, $R^4$ and $R^5$ are each a hydrogen atom (provided that $R^3$, $R^4$ and $R^5$ are not hydrogen atoms at the same time), an alkyl group containing from 1 to 15 carbon atoms, an aryl group containing from 6 to 15 carbon atoms, or a group of the formula $-OR^7$ (wherein $R^7$ is an alkyl group containing from 1 to 10 carbon atoms or an aryl group containing from 6 to 15 carbon atoms), and $R^6$ is a hydrogen atom, an alkyl group containing from 1 to 15 carbon atoms, or an aryl group containing from 6 to 15 carbon atoms.

The $HF_2^-$ anion is usually prepared by dissolving the compound (a hydrogen fluoride salt) represented by the formula (IV), (V) or (VI) as described below, as a supporting electrolyte, in a suitable organic solvent.

$$R^8{}_4N\cdot HF_2 \qquad (IV)$$

$$M\cdot HF_2 \qquad (V)$$

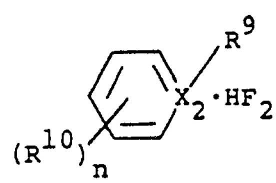 (VI)

wherein $R^8$ and $R^9$ are each a hydrogen atom, an alkyl group containing from 1 to 15 carbon atoms, or an aryl group containing from 6 to 15 carbon atoms, $R^{10}$ is an alkyl group containing from 1 to 10 carbon atoms, or an aryl group containing from 6 to 15 carbon atoms, $X_2$ is an oxygen atom or a nitrogen atom, n is 0 or a positive integer of 1 to 5, and M is an alkali metal atom.

Typical examples of compounds represented by the formulae (IV), (V) and (VI) are as follows:

$H_4N\cdot HF_2$, $Bu_4N\cdot HF_2$, $Na\cdot HF_2$, $Li\cdot HF_2$,

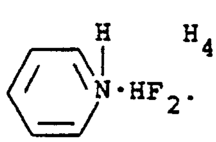

and

The pyrylium or pyridinium cation represented by the formula (I) is preapred by dissolving a salt of a cation represented by the formula (I) and an anion, such as $ClO_4^-$, $BF_4^-$, $AlCl_4^-$, $FeCl_4^-$, $SnCl_5^-$, $PF_6^-$, $PCl_6^-$, $SbF_6^-$, $AsF_6^-$, $CF_3SO_3^-$, and $HF_2^-$, as a supporting electrolyte, in a suitable organic solvent.

Typical examples of such salts are shown below:

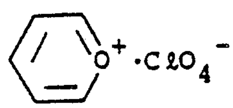

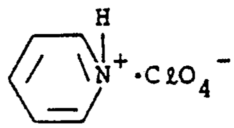

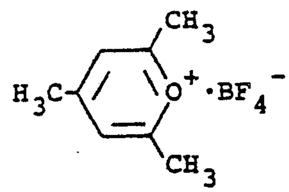

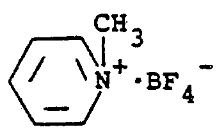

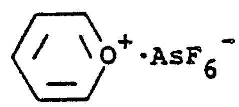

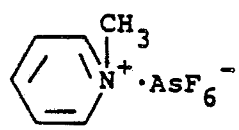

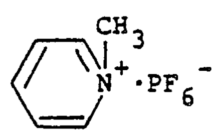

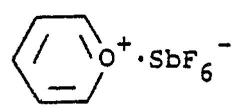

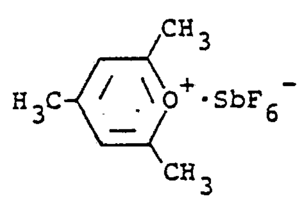

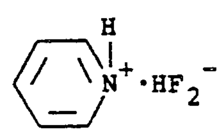

Typical examples of the carbonium cations represented by the formulae (II) and (III) are as follows:

$(C_6H_5)_3C^+$, $(CH_3)_3C^+$, $\underset{\underset{O}{\|}}{HC^+}$, and $C_6H_5\,\underset{\underset{O}{\|}}{C^+}$

These carbonyl cations are prepared by dissolving the salts of the cations and anions (carbonium salts), as supporting electrolytes, in a suitable organic solvent. Typical examples of such anions include $BF_4^-$, $AlCl_4^-$, $AlBr_3Cl^-$, $FeCl_4^-$, $SnCl_3^-$, $PF_6^-$, $PCl_6^-$, $SbCl_6^-$, $SbF_6^-$, $ClO_4^-$, and $CF_3SO_3^-$. Typical examples of the carbonium cations are as follows:

$(C_6H_5)_3C{\cdot}BF_4$, $(CH_3)_3C{\cdot}BF_4$, $HCO{\cdot}AlCl_4$, $HCO{\cdot}BF_4$, and $C_6H_5CO{\cdot}SnCl_5$.

The electrolytre for use in electrochemical doping may be either an aqueous solution or a non-aqueous solution. Preferably the electrolyte is prepared by dissolving the above-described dopant in a non-aqueous organic solvent. This non-aqueous organic solvent is preferably aprotic and is of high dielectric constant. Examples are ethers, ketones, nitriles, amines, amides, sulfur compounds, phosphates, phosphites, borates, chlorinated hydrocarbons, esters, carbonates, and nitro compounds. Of these compounds, ethers, ketones, nitriles, phosphates, phosphites, borates, chlorinated hydrocarbons and carbonates are preferred. Typical examples of such preferred compounds include tetrahydrofuran, 2-methyl-tetrahydrofuran, 1,4-dioxane, monoglyme, acetonitrile, propionitrile, 4-methyl-2-pentanone, butyronitrile, valeronitrile, benzonitrile, 1,2-dichloroethane, γ-butyrolactone, valerolactone, tolunitrile, dimethoxyethane, methyl formate, propylene carbonate, ethylene carbonate, dimethylformamide, dimethylsulfoxide, dimethylthioformamide, ethyl phosphate, methyl phosphate, ethyl phosphite, methyl phosphite, sulfolane and 3-methyl sulfolane. These organic solvents can be used along or as a mixture comprising two or more thereof. Depending on the type of the battery or the type of the electrode, oxygen, water, a protic solvent, and so forth in the organic solvents may reduce the characteristics of the battery. Thus, it is preferred for the organic solvents to be purified using conventional methods.

The amount of the dopant doped onto the acetylene polymer and other conjugated polymeric compounds is from about 2 to about 40 mol%, preferably from 4 to 30 mol%, and most preferably from 5 to 20 mol%, per mol of the recurring unit of the acetylene polymer and other conjugated polymeric compounds, If the amount of the dopant is less than 2 mol% or greater than 40 mol%, a battery having a sufficiently high discharge capacity cannot be obtained.

The amount of the dopant can be controlled appropriately by measuring the amount of electricity passed during electrolysis. The doping may be performed either at a constant current, or at a constant voltage, or under the conditions that both the current and voltage change. The current value, the voltage value, the doping time, and so forth in conducting the doping operation cannot be determined unconditionally since they vary with the bulk density of the acetylene polymer and other conjugated polymeric compounds, the area, the type of the dopant, and the type of the electrolyte.

In the secondary battery which can be produced using the acetylene polymer purified by the process of this invention, as well as the above-described electrolytes, high ion conductivity organic solid electrolytes compirisng polyethylene oxide and NaI, NaSCN or the like, and paste-like mixtures of electrolytes (dopants) and organic solvents can be used.

Moreover, since the concentration of the electrolyte as used in this secondary battery varies with the type of positive or negative electrode, charge-discharge conditions, operation temperature, the type of electrolyte, the type of organic solvent, and so forth, the concentration cannot be set forth specifically. The electrolyte may be either a homogeneous system or a heterogeneous system, and the electrolyte concentration is usually within the range of from 0.001 to 10 mol/l.

The acetylene polymer or the electrically conductive acetylene polymer prepared by doping a dopant onto the purified acetylene polymer produced with this invention can be used in the production of a secondary battery in various manners: (1) only a positive electrode is made of the polymer, (2) only a negative electrode is made of the polymer, and (3) both the positive and negative electrode are made of the polymer. In a preferred arrangement, both the positive and negative electrodes are made of the polymer.

Typical examples of secondary batteries are shown below.

Type (1):

| Positive electrode | Electrolyte | Negative electrode |
|---|---|---|
| $(CH)_x$ | $LiClO_4$ | Li |
| $[(CH^{+0.06}(ClO_4)^-_{0.06}]_x$ | $LiClO_4$ | Li |
| $(CH)_x$ | $LiBF_4$ | $(C_6H_4)_x$ |

Type (2):

| Positive electrode | Electrolyte | Negative electrode |
|---|---|---|
| $(C_6H_4)_x$ | $LiBF_4$ | $(CH)_x$ |

Type (3):

| Positive electrode | Electrolyte | Negative electrode |
|---|---|---|
| $(CH)_x$ | $Et_4N{\cdot}BF_4$ | $(CH)_x$ |
| $[(CH)^{+0.024}(ClO_4)^{-0.024}]_x$ | $(n\text{-}Bu_4N)^+{\cdot}(ClO_4)^-$ | $[(n\text{-}Bu_4N)^{+0.024}(CH)^{-0.024}]_x$ |
| $[(CH)^{+0.06}(PF_6)^{-0.06}]_x$ | $(n\text{-}Bu_4N)^+{\cdot}(PF_6)^-$ | $[(n\text{-}Bu_4N)^{+0.06}(CH)^{-0.06}]_n$ |
| $[(CH)^{+0.050}(ClO_4)^{-0.050}]_x$ | $(n\text{-}Bu_4N)^+{\cdot}(ClO_4)^-$ | $[(CH)^{+0.020}(ClO_4)^{-0.020}]_x$ |
| $[(n\text{-}Bu_4N)^{+0.02}(CH)^{-0.02}]_x$ | $(n\text{-}Bu_4N)^+{\cdot}(ClO_4)^-$ | $[(n\text{-}Bu_4N)^{+0.07}(CH)^{-0.07}]_x$ |
| $[(CH]^{+0.010}(I_3)^{-0.010}]_x$ | NaI | $[(CH)^{-0.010}[Na)^{+0.010}]_x$ |

The symbols "$(CH)_x$" and "$(C_6H_4)_x$" represent an acetylene polymer and poly(p-phenylene), respectively.

Other examples are shown below:

$(CH)_x$/graphite, $(CH)_x/(C_4H_2S)_x$, $(CH)_x$/graphite, $(CH)_x$/crbon fiber, and $(CH)_x/TiS_2$.

In the secondary battery, if necessary, a glass plate, a porous film made of a synthetic resin such as polyethylene or polypropylene, and a sheet of natural fiber paper can be used as a membrane.

Some of the acetylene and other conjugated polymers as used herein are sometimes gradually oxidized by oxygen, decreasing the performance of the battery. Thus, it is preferred for the battery to be sealed and kept in a substantially oxygen-free state.

The secondary battery produced using the aceytlene polymer purified by the process of this invention has various advantages; for example, the cycle life is long, the energy density if high, and the self-discharge rate, the voltage stability and the charge-discharge efficiency are good. Furthermore, the secondary battery is light, small-sized, and has a high energy density. Hence, it is suitable for use in portable devices, electric cars, gasoline cars, and as a battery for the storage of electric power.

The present invention is described in greater detail by reference to the following Examples and Comparative Examples.

The amount of the residual catalyst was measured using a fluorescent X-ray method.

The pulverizer used was a desk ball mill (manufactured by Irie Shokai Co., Ltd.), and stainless steel balls of a diameter of 10 mm were used.

The results are shown in Tables 1, 2, 3 and 4 below.

Example 1

A 1-liter glassclave was charged with 500 ml of xylene, 1 g (8.7 mmol) of triisobutyl aluminium, and 1.5 g (4.4 mmol) of tetrapropyl titanate, and acetylene gas was blown through the above-prepared mixture at 60°C for 2 hours while stirring the mixture. After the polymerization reaction was completed, a powder portion separated. Then, 10g of the powder was added to a solution of 15 g of benzoic acid dissolved in 100 ml of chlorobenzene and the mixture was stirred at room temperature (about 20—30°C) for 2 hours. After the separation of the liquid portion, the resulting powder was fully washed with chlorobenzene and dried.

Example 2

A powdery polyacetylene was produced in the same manner as described in Example 1 except that 3 g of a powder prepared by grinding 50 g of diethoxymagnesium and 10 g of tetraethyl titanate in an oscillating ball mill (magnetic balls of a diameter of 10 mm constituted about 50% of the internal volume of 1 liter) was used in place of the tetrapropyl titanate.

To 10 g of the thus-obtained powder were added 100 ml of acetonitrile and 20 g of maleic acid, and the resulting mixture was then stirred at 60°C for 6 hours. The powder was separated, fully washed with acetonitrile, and dried.

Example 3

The procedure of Example 1 was repeated and 2.0 g of phenylacetylene was introduced prior to the introduction of acetylene gas, whereby 12 g of a powder was formed. The content of phenylacetylene units of the powder was 10% by weight. To this powder was added 50 ml of acetic anhydride, and the resulting mixture was stirred at room temperature for 2 hours. After the separation of the liquid portion, the residue was fully washed with toluene to remove the acetic anhydride and then dried.

Example 4

A powder material was produced in the same manner as in Example 1 except that ethyl alcohol was used in place of xylene, 10 g (0.26 mol) of sodium borohydride was in place of the triisobutyl aluminium,

and 8 g (0.024 mol) of cobalt nitrate was used in place of the tetrapropyl titanate. To 0.5 g of the powder material was added a mixture of 50 ml of acetone and 20 ml of butyric acid, and the resulting mixture was then stirred at room temperature for 6 hours. Then, the powder material was fully washed with ethyl alcohol and dried.

Example 5

To 10 g of a powder material produced in the same manner as in Example 1 were added 100 ml of tetrahydrofuran and 50 ml of formic acid, and the resulting mixture was stirred at 40°C for 5 hours. Then, the powder material was fully washed with tetrahydrofuran and dried.

Example 6

To 10 g of an polyacetylene powder produced in the same manner as in Example 1 were added 100 ml of methyl alcohol and 40 ml of acetic acid, and the resulting mixture was stirred at room temperature for 2 hours. The powder was separated, and then fully washed with methyl alcohol and dried.

Comparative Example 1

A mixture of 30 ml of toluene, 4 g (11.7 mmol) of tetrabutyl titanate, and 4 g (35 mmol) of triethyl aluminum was placed in a Shlenk's flask, which was then connected to a vacuum line system. Acetylene gas was blown through the mixture at −78°C while at the same time the flask was agitated to form a film on the inner surface of the flask. After 2 hours, the polymerization reaction was stopped to obtain 2 g of the film. Then, 1 g of the film was immersed in 50 ml of acetic acid and allowed to stand at 0°C for 48 hours. At the end of the time, the film was removed from the acetic acid, fully washed with toluene to remove the acetic acid, and dried.

Comparative Example 2

A film (1 g) produced in the same manner as in Comparative Example 1 was placed in 100 ml of toluene and allowed to stand for 24 hours. At the end of the time, the film was removed and dried.

Comparative Example 3

The same procedure of purification as in Comparative Example 2 was repeated five times using 100 ml portions of toluene (total amount: 500 ml) for 120 hours, and the film was then dried.

Comparative Example 4

To 10 g of a polymer powder produced in the same manner as in Example 1 was added 100 ml of toluene, and the resulting mixture was stirred at room temperature for 24 hours. The polymer was separated, and then fully washed with toluene and dried.

Comparative Example 5

The procedure of Example 6 was repeated but acetic acid was not added.

Comparative Example 6

The procedure of Example 2 was repeated but the amount of maleic acid was changed to 0.1 g.

Comparative Example 7

To 10 g of a powder material produced in the same manner as in Example 1 was added 100 ml of sulfuric acid, and the resulting mixture was stirred at room temperature for 24 hours. The powder material was separated, and then washed with toluene many times, but the sulfuric acid doping could not be removed. Thus, the powder material with sulfuric acid doped therein (about 5 mol%) was dried as such.

Comparative Example 8

The procedure of Comparative Example 7 was repeated wherein hydrochloric acid was used in place of sulfuric acid. The hydrochloric acid doping could not be removed and remained in an amount of about 4 mol%.

Example 7

A Shlenk's flask was charged with 30 ml of toluene, 4 g (11.7 mmol) of tetrabutyl titanate, and 4 g (35 mmol) of triethylaluminum and then connected to a vacuum line system. After the mixture was cooled to −78°C, the flask was rotated to uniformly coat the catalyst solution on the inner surface thereof. Then, acetylene gas was passed thereinto to form a film of polyacetylene on the inner surface of the flask. After 2 hours, the polymerization was stopped, and 2 g of the film was obtained. Then, 1 g of the film was mixed with 10 ml of acetic anhydride, and the resulting mixture was pulverized for 4 hours and subsequently washed with toluene. The pulverized product was removed and the amount of the residual catalyst was measured.

Example 8

A 1-liter glassclave was charged with 500 ml of xylene, 1 g (8.7 mmol) of triisobutylaluminum, 1.5 g (4.4 mmol) of tetrapropyl titanate, and 0.5 g of phenylacetylene. Then, acetylene gas was passed through the mixture at 60°C for 2 hours while stirring the mixture. After the completion of polymerization, a powder portion was separated. Infrared spectrum analysis showed that the copolymer thus-produced contained 8 mol% of phenyl-acetylene. To 10 g of the powder was added a solution of 15 g of benzoic acid dissolved in 100 ml of chlorobenzene, and the resulting mixture was pulverized at room temperature for 2 hours and washed with toluene. After this washing procedure, the amount of the residual catalyst was measured.

Example 9

A 1-liter glass autoclave equipped with an impeller blade type mechanical stirrer was charged with 200 ml of toluene, 2 ml (5.9 mmol) of tetrabutoxy titanium, and 2 ml (14.6 mmol) of triethylaluminum in an atmosphere of nitrogen, and acetylene gas was introduced therein and polymerized at a polymerization temperature of −78°C under an acetylene partial pressure of $8{,}810^4$ Pa (0.9 kg/cm$^2$) for 2 hours. Simultaneously with the introduction of the acetylene gas, polyacetylene in the form of short fibers of a length about 1 mm began to form.

After the polymerization was completed, the short fiber-shaped polyacetylene was placed on a glass filter and fully washed with about 1 liter of toluene to remove the catalyst. The short fiber-shaped polyacetylene after the removal of the catalyst contained 52% by weight of toluene. Then, 1 g of the toluene-containing short fiber-shaped polyacetylene, 10 g of acetic acid, and 100 g of toluene were mixed, and pulverized for 4 hours. After washing with toluene, the amount of the residual catalyst was measured.

Example 10

A 1-liter glass autoclave equipped with an impeller blade type mechanical stirrer was charged with 500 ml of toluene, 0.2 ml (0.59 mmol) of tetrabutoxy titanium and 2 ml (14.6 mmol) of triethylaluminum, and acetylene gas was introduced therein and polymerized at a polymerization temperature of 30°C under an acetylene partial pressure of $1{,}57.10^5$Pa (1.6 kg/cm$^2$) for 1 hour while stirring the mixture. Simultaneously with the introduction of the acetylene gas, a black polyacetylene powder with a grain size of about 0.1 mm was formed. To 1 g of the polyacetylene were added 50 g of xylene and 5 g of acetic acid, and the resulting mixture was pulverized for 6 hours and washed with toluene. Then, the amount of the residual catalyst was measured.

Example 11

The procedure of Example 8 was repeated wherein in place of tetrapropyl titanate was used 3 g of a powder prepared by pulverizing 50 g of diethoxy magnesium and 10 g of tetraethyl titanate in an oscillating ball mill (magnetic balls having a diameter of 10 mm occupied about 50% by volume of the inner volume of 1 liter). To 10 g of the above-produced acetylene polymer powder were added 100 ml of acetonitrile and 20 g of maleic acid, and the resulting mixture was wet pulverized for 5 hours and washed with acetonitrile. The amount of the residual catalyst was measured.

Example 12

The procedure of Example 8 was repeated wherein ethyl alcohol was used in place of xylene, 10 g (0.26 mmol) of sodium borohydride was used in place of triisobutylaluminum, and 8 g (0.024 mmol) of cobalt nitrate was used in place of tetrapropyl titanium. To 0.5 g of the above-produced acetylene polymer powder were added 50 ml of acetone and 20 ml of butyric acid, and the resulting mixture was wet pulverized at room temperature for 6 hours and then washed with ethyl alcohol. Then, the amount of the residual catalyst was measured.

Example 13

To 10 g of the powder produced in Example 10 were added 100 ml of tetrahydrofuran and 50 ml of formic acid, and the resulting mixture was wet pulverized for 5 hours. After the pulverization process, the mixture was washed with tetrahydrofuran, and then the amount of the residual catalyst was measured.

Example 14

To 10 g of the powder produced in Example 10 were added 10 ml of methyl alcohol and 40 ml of acetic acid, and the resulting mixture was wet pulverized at room temperature for 2 hours. After separation, the powder was washed with methyl alcohol, and then the amount of the residual catalyst was measured.

Comparative Example 9

The procedures of Example 10 were repeated but acetic acid was not used.

Comparative Example 10

The procedures of Example 10 were repeated and the mixture was immersed in a mixed solvent of acetic acid and xylene (weight ratio 1:10) for 6 hours without application of pulverization.

Example 15

A 1-liter glass autoclave was charged with 500 ml of xylene, 3.4 g (14.6 mmol) of triethylaluminum, and 2.0 g (5.8 mmol) of tetrabutyl titanate, and acetylene gas was introduced therein and polymerized while stirring the mixture at room temperature under a partial pressure of $8{,}8.10^4$Pa (0.9 kg/$cm^2$) for 4 hours to form polyacetylene in the form of a powder. Then, 5 g of the powder was placed in a cylindrical filter paper, which was then placed in a Soxlet extractor filled with 300 ml of lactic acid. A shaft for stirring was inserted from the top portion of the condensor of the Soxlet extractor in the inside thereof until it reached the filter paper. An extraction procedure was performed under reflux for 6 hours while stirring the polyacetylene. The thus-treated polymer was dried.

Example 16

A copolymer powder was produced in the same manner as described in Example 15 except that prior to the introduction of the acetylene gas, 2 ml (about 9.8 mmol) of phenylacetylene was introduced. Infrared spectral analysis showed that the acetylene copolymer powder contained 10 mol% of phenylacetylene units. This powder was extracted under reflux in the same manner as described in Example 15 and then dried.

Example 17

Polyacetylene was produced in the same manner as described in Example 15. This polyacetylene was extracted and dried in the same manner as described in Example 15 except that the type of organic solvent was changed to acetic acid and the extraction procedure was performed under atmospheric pressure.

Comparative Example 11

The procedures of Example 15 were repeated but the extraction using lactic acid was not performed, but rather a procedure of adding 100 ml of toluene, stirring the mixture for 24 hours, and then filtering the mixture was repeated five times.

Comparative Example 12

The procedures of Example 15 were repeated but toluene was used in place of the lactic acid.

Comparative Example 13

The procedures of Example 15 were repeated but the polyacetylene was not stirred.

TABLE 1

| Run No. | Amount of Residual Catalyst (wt ppm) | | | |
|---|---|---|---|---|
| Example 1 | Al | 350 | Ti | 400 |
| Example 2 | Al | 180 | Ti | 120 |
| Example 3 | Al | 100 | Ti | 110 |
| Example 4 | Na | 290 | Co | 300 |
| Example 5 | Al | 160 | Ti | 190 |
| Example 6 | Al | 70 | Ti | 70 |

TABLE 2

| Run No. | Amount of Residual Catalyst (wt ppm) | | | |
|---|---|---|---|---|
| Comparative Example 1 | Al | 900 | Ti | 1,000 |
| Comparative Example 2 | Al | 3,000 | Ti | 4,500 |
| Comparative Example 3 | Al | 1,500 | Ti | 2,000 |
| Comparative Example 4 | Al | 1,800 | Ti | 2,000 |
| Comparative Example 5 | Al | 2,000 | Ti | 2,300 |
| Comparative Example 6 | Al | 2,800 | Ti | 2,900 |
| Comparative Example 7 | Al | 300 | Ti | 400 |
| Comparative Example 8 | Al | 380 | Ti | 410 |

TABLE 3

| Run No. | Amount of Residual Catalyst (wt ppm) | | | |
|---|---|---|---|---|
| Example 7 | Al | 43 | Ti | 50 |
| Example 8 | Al | 70 | Ti | 95 |
| Example 9 | Al | 39 | Ti | 83 |
| Example 10 | Al | 49 | Ti | 77 |
| Example 11 | Al | 75 | Ti | 89 |
| Example 12 | Na | 63 | Co | 69 |
| Example 13 | Al | 21 | Ti | 43 |
| Example 14 | Al | 38 | Ti | 71 |
| Comparative Example 9 | Al | 1,200 | Ti | 4,200 |
| Comparative Example 10 | Al | 150 | Ti | 160 |

TABLE 4

| Run No. | Extraction Solvent | Amount of Residual Catalyst (wt ppm) | | | |
|---|---|---|---|---|---|
| Example 15 | Lactic Acid | Al | 35 | Ti | 23 |
| Example 16 | Lactic Acid | Al | 30 | Ti | 14 |
| Example 17 | Acetic Acid | Al | 65 | Ti | 70 |
| Comparative Example 11 | Toluene (room temperature) | Al | 1,500 | Ti | 2,100 |
| Comparative Example 12 | Toluene | Al | 1,020 | Ti | 1,300 |
| Comparative Example 13 | Lactic Acid (without stirring) | Al | 680 | Ti | 630 |

Reference Example 1

Purified polyacetylene as produced in Example 1 was press molded under a pressure of 1 ton/cm$^2$ to form a sheet. Two pieces of a width of 0.5 cm and a length of 2.0 cm were cut from the sheet, fitted mechanically to platinum wires, and used as a negative electrode and a positive electrode. A sulfolane solution (concentration of $LiBF_4$: 1.0 mol/l) was used as an electrolyte. Charging was performed for 2 hours with a given amount of current (1.0 mA/cm$^2$) (the amount of electricity was eqivalent to a doping level of 7 mol%). Immediately after the completion of charging, discharging was performed with a given amount of current (1.0 mA/cm$^2$). When the voltage reached 0.5 V, charging was performed under the same conditions as above. This procedure of charging-discharging could be repeated 488 times.

The theoretical energy density per kilogram of the active substance used as determined after the first charging-discharging procedure was 136 W·hr/kg, and the charging-discharging efficiency was 97%. The ratio of the amount of electricity discharged until the voltage dropped to 1.5 V in relation to the total amount of electricity discharged was 93%.

Reference Examples 2 to 6

The procedures of Reference Example 1 were repeated wherein the acetylene polymers shown in Table 3 were used in place of the polyacetylene used in Reference Example 1. The results obtained are shown in Table 5 below.

TABLE 5

| Run No. | Acetylene Polymer Used | Number of Procedures Repeated | Theoretical Energy Density (W·hr/kg) |
|---|---|---|---|
| Reference Example 2 | Polymer of Example 2 | 367 | 132 |
| Reference Example 3 | Polymer of Example 3 | 405 | 128 |
| Reference Example 4 | Polymer of Example 4 | 371 | 129 |
| Reference Example 5 | Polymer of Example 5 | 316 | 133 |
| Reference Example 6 | Polymer of Example 6 | 389 | 130 |

Reference Example 7

The procedures of Reference Example 1 were repeated wherein the film-shaped acetylene polymer as produced in Comparative Example 1 was used in place of the polyacetylene used in Reference Example 1, and the same charging-discharging repeating test was carried out. After the test had been repeated only 15 times, the charging became impossible. After the test, the composite material was removed and examined. This examination showed that the mold was broken. Elemental analysis and infrared spectral analysis of part of the composite material demonstrated that the material was oxidized and degraded.

The theoretical energy density per kilogram of the active substance used determined after the first charging-discharging test was 114 W·hr/kg, and the charging-discharging efficiency was 81%. The ratio of the amount of electricity discharged until the voltage dropped to 1.5 V with respect to the total amount of electricity discharged was 83%.

Reference Examples 3 to 14

The procedures of Reference Example 7 were repeated wherein the acetylene polymers shown in Table 6 below were used in place of the acetylene polymer used in Reference Example 7. The results obtained are shown in Table 6 below.

TABLE 6

| Run No. | Acetylene Polymer Used | Number of Procedures Repeated | Theoretical Energy Density (W·hr/kg) |
|---|---|---|---|
| Reference Example 8 | Polymer of Comparative Example 2 | 128 | 115 |
| Reference Example 9 | Polymer of Comparative Example 3 | 146 | 120 |
| Reference Example 10 | Polymer of Comparative Example 4 | 166 | 121 |
| Reference Example 11 | Polymer of Comparative Example 5 | 170 | 119 |
| Reference Example 12 | Polymer of Comparative Example 6 | 216 | 122 |
| Reference Example 13 | Polymer of Comparative Example 7 | 187 | 106 |
| Reference Example 14 | Polymer of Comparative Example 8 | 174 | 104 |

In reference Examples 7 to 12, the amount of the residual catalyst was large, and in Reference Examples 13 and 14, the inorganic acids were doped although the amount of the residual catalyst was small. Thus, the number of procedures repeated and the theoretical energy density were low in all of Reference Examples 7 to 14.

Reference Example 15

Battery Test

The purified polyacetylene as produced in Example 15 was press molded under a presure of 1 ton/cm$^2$ to form a sheet. Two pieces of a width of 0.5 cm and a length of 2.0 cm were cut out of the sheet, fitted mechanically to platinum wires, and used as cathode and an anode. A sulfolane solution (concentration of $LiBF_4$: 1.0 mol/l) was used as an electrolyte. Charging was performed for 2 hours with a given amount of

current (1.0 mA/cm$^2$) (the amount of electricity was equivalent to a doping level of 6 mol%). Immediately after the completion of charging, discharging was performed with a given amount of current (1.0 mA/cm$^2$). When the voltage reached 0.5 V, charging was performed under the same conditions as above. This procedure of charging-discharging could be repeated 560 times.

The theoretical energy density per kilogram of the active substance as determined after the first charging-discharging procedure was 118 W·hr/kg, and the charging-discharging efficiency was 97%. The ratio of the amount of electricity discharged until the voltage dropped to 1.5 V to the total amount of electricity discharged was 95%.

Reference Examples 16 and 17

The battery test was performed in the same manner as in Reference Example 15 except that the acetylene polymers shown in Table 4 were used in place of the polyacetylene used in Reference Example 15. The results are shown in Table 7 below.

TABLE 7

| Run No. | Acetylene Polymer Used | Number of Procedures Repeated | Theoretical Energy Density (W·hr/kg) |
|---|---|---|---|
| Reference Example 16 | Polymer of Example 16 | 508 | 117 |
| Reference Example 17 | Polymer of Example 17 | 410 | 114 |

Reference Example 18

The battery test was performed in the same manner as in Reference Example 15 except that the polyacetylene produced in Comparative Example 12 was used in place of that used in Reference Example 15. When the charging-discharging procedure was repeated 190 times, charging became impossible. After the test, the composite material was removed and examined. This examination showed that the mold was broken. Elemental analysis and infrared spectral analysis of part of the mold demonstrated that the material was oxidized and degraded.

The theoretical energy density per kilogram of the active substance was used as determined after the first charging-discharging test was 114 W·hr/kg, and the charging-discharging efficiency was 90%. The ratio of the amount of electricity discharged until the voltage dropped to 1.5 V to the total amount of electricity discharged was 86%.

Production of secondary batteries in which the purified acetylene polymer is particularly useful is described in greater detail below with reference to the following Production Examples and Comparative Production Examples.

Production Example 1

Preparation of Electrode

A 1-liter glass autoclave equipped with an impeller blade type mechanical stirrer was charged with 200 ml of toluene, 2 ml (5.9 mmol) of tetrabutoxy titanium, and 2 ml (14.6 mmol) of triethyl aluminum in an atmosphere of nitrogen, and acetylene was introduced therein and polymerized at a polymerization temperature of −20°C under an acetylene partial pressure of 8,8.104 Pa (0.9 kg/cm$^2$) for 2 hours while stirring the mixture. Simultaneously with the introduction of the acetylene gas, a red-purple polyacetylene in the form of short fibers of lengths of about 1 mm started to form.

After the completion of polymerization, the short fiber-formed polyacetylene containing toluene was placed on a glass filter and purified with an organic acid by fully washing the polyacetylene with about 1 liter of a 1:1 (by volume) mixture of acetic acid and methanol to remove the catalyst. Subsequently, the polyacetylene was washed with about 1 liter of toluene. The amount of the residual catalyst in the polyacetylene before or after the purification as follows:

| | Al Atom (ppm) | Ti Atom (ppm) |
|---|---|---|
| Before Purification | 3,500 | 1,400 |
| After Purification | 78 | 50 |

The short fiber-formed polyacetylene after the removal of the catalyst contained 52% by weight of toluene. Then, 20.8 g of the polyacetylene and 0.45 g of carbon black powder (electrical conductance: 21 $\Omega^{-1}\cdot cm^{-1}$) were mixed in a ball mill. The resulting mixture was placed on a metal net, pressed at room temperature under a pressure of $2{,}94.10^{7}$ Pa (300 $kg/cm^2$), and then deaerated in vacuum, whereby a 150 µm thick composite material of the polyacetylene, metal net, and carbon black was obtained. This composite material had a structure that the metal net was sandwiched between the polyacetylene-carbon black mixture layers, and its surface had metallic lustre. The amount of the metal net in the composite material was 50 parts by weight per 100 parts by weight of the polyacetylene.

The yield of the polyacetylene was 13 g; the cis content was 76%; and the electrical conductance at room temperature (as determined by a D.C. two-terminal method) was $5.1\times10^{-6}\Omega^{-1}\cdot cm^{-1}$. Scanning electron microscope analysis showed that the polyacetylene was composed of fibrils having a diameter of from 200 to 400 Å.

Battery Test

Two pieces of predetermined dimensions were cut from the composite material as prepared above and used as electrodes, cathode and anode, to fabricate a battery.

The Figure is a schematic cross-sectional view of a battery cell for the measurement of the characteristics of a button type battery, an example of a secondary battery.

This battery cell comprised an Ni-plated brass container 1, a circular negative electrode 2 (diameter: 20 mm), a circular porous polypropylene membrane 3 (diameter: 26 mm), a circular carbon fiber felt 4 (diameter: 26 mm), a positive electrode 5, a Teflon (Teflopore FP—200, produced by Sumitomo Electric Co., Ltd.) sheet 6 with holes (average diameter: 2 µm) bored therein, a Teflon container 7 having a circular cross section, a Teflon ring 8 for the fixation of the positive electrode 5, and an Ni lead wire 9.

The positive electrode 5 was placed in a concave portion of the lower portion of the container 1, and the circular porous Teflon sheet 6 was superposed on the positive electrode 5. They were then fixed therein by clamping with the Teflon ring 8. The felt 4 was placed in a concave portion of the upper portion of the container 1, superposed on the positive electrode 5, and impregnated with an electrolyte. The negative electrode 2 was placed thereon through the membrane 3. They were then clamped with the container 7 to fabricate a battery. The electrolyte was 1.5 mol/l solution of $Bu_4N\cdot BF_4$ in distilled and dried acetonitrile.

Charging was performed at a constant current (3.0 $mA/cm^2$) for a predetermined period of time (the amount of electricity was equivalent to 5 mol% of the doping level). After the completion of charging, discharge was immediately performed at a constant current (5.0 $mA/cm^2$) until the voltage dropped to 1.0 V. This charge-discharge cycle was repeated. It was found that the charging could be performed until the number of cycles reached 623. After the tenth charging, the battery was allowed to stand for 48 hours. At the end of the time, the self discharge rate was measured and found to be 7%.

Comparative Production Example 1

The procedures used in the Preparation of Electrode section of Production Example 1 were repeated wherein toluene was used in place of the acetic acid/methanol (1:1 by volume) mixture. The amount of the residual catalyst after the purification with toluene was as follows:

| Al Atom (ppm) | Ti Atom (ppm) |
|---|---|
| 1,250 | 730 |

The thus-fabricated battery was subjected to the same battery test as in Production Example 1. The charge-discharge procedure could be repeated until the number of cycles reached 383, and the self discharge rate was 19%.

Production Examples 2 to 6 and Comparative Production Examples 2 to 5

The procedures as described in the Preparation of Electrode section of Production Example 1 were repeated wherein the solvents shown in Table 8 below were each used in place of the acetic acid/methanol (1:1 by volume) mixture.

The thus-fabricated batteries were each subjected to the same battery test as in Production Example 1. The results obtained are shown in Table 8 below.

TABLE 8

| Run No. | Solvent | Residual Catalyst Al | Ti | Number of Charge-Discharge Cycles | Self Discharge Rate |
|---|---|---|---|---|---|
| | (volume ratio) | | | | (%) |
| Prod. Ex. 2 | Acetic Acid | 110 | 60 | 617 | 8 |
| Prod. Ex. 3 | Glycolic Acid/ Methanol (1:1) | 60 | 60 | 583 | 9 |
| Prod. Ex. 4 | Lactic Acid/ Methanol (1:1) | 150 | 120 | 529 | 10 |
| Prod. Ex. 5 | Acetic Acid/ Toluene (1:1) | 90 | 80 | 532 | 11 |
| Prod. Ex. 6 | Benzoic Acid/ Methanol (1:1) | 150 | 140 | 489 | 10 |
| Comp. Prod. Example 2 | Hydrochloric Acid (HCl) | 450 | 390 | 219 | 18 |
| Comp. Prod. Example 3 | HCl/Methanol (1:1) | 460 | 410 | 208 | 20 |
| Comp. Prod. Example 4 | Nitric Acid | 770 | 590 | 227 | 19 |
| Comp. Prod. Example 5 | Sulfuric Acid | 840 | 460 | 244 | 21 |

Comparative Production Example 6

Preparation of Electrode

Titanium tetrabutoxide (1.7 ml) was placed in a 500-ml glass reactor in a nitrogen atmosphere and dissolved in 30 ml of toluene, and 2.7 ml of triethylaluminum was added thereto while stirring the mixture to prepare a catalyst solution.

The reactor was cooled with liquid nitrogen, and the nitrogen gas in the system was evacuated by means of a vacuum pump. Then, the reactor was cooled to −78°C, and the catalyst solution was shaken for attachment on the walls of the reactor. Subsequently, purified acetylene gas was passed therethrough at a pressure of 1 atmosphere.

Immediately polymerization of acetylene occurred on the wall surface to which the catalyst solution had adhered, resulting in the formation of a film-form polyacetylene. Forty nine minutes after the introduction of acetylene, the acetylene gas was evacuated to stop the polymerization. The catalyst solution was removed under a nitrogen atmosphere by means of a syringe. The polyacetylene was washed five times with 100 ml of purified toluene while maintaining it at −78°C. The amount of the residual catalyst before or after the washing process was as follows:

| | Al Atom | Ti Atom |
|---|---|---|
| | (ppm) | (ppm) |
| Before Washing | 5,200 | 3,800 |
| After Washing | 1,700 | 1,200 |

The thus-produced polyacetylene was a uniform film-form product in which fibrils were densely intertwined. This film-form product was vacuum dried to obtain a red-purple film-form polyacetylene having a metallic lustre, in which the thickness was 85 μm and the cis-content was 98%.

Battery Test

Two pieces of predetermined dimensions were cut from the above-prepared film-form polyacetylene and used as electrodes, cathode and anode. Using these electrodes, a battery was fabricated in the same manner as in Production Example 1.

The charge-discharge test was performed in the same manner as in Production Example 1. This charge-discharge cycle could be repeated until the number of cycles reached 394. The self-discharge rate was 17%.

Compartive Production Examples 7 to 11

The procedures as in the Preparation of Electrode section and in the Battery Test section of Comparative Production Example 6 were repeated wherein in washing the film form polyacetylene after the completion of the polymerization, the solvents as shown in Table 9 were each used in place of toluene. The results are shown in Table 9 below.

TABLE 9

| Run No. | Solvent | Residual Catalyst Al | Residual Catalyst Ti | Number of Charge-Discharge Cycles | Self Discharge Rate |
|---|---|---|---|---|---|
| | (volume ratio) | (ppm) | (ppm) | | (%) |
| Comp. Prod. Example 7 | Hydrochloric Acid (HCl) | 1,170 | 680 | 241 | 23 |
| Comp. Prod. Example 8 | HCl/Methanol (1:1) | 970 | 550 | 235 | 21 |
| Comp. Prod. Example 9 | Nitric Acid | 1,340 | 720 | 127 | 25 |
| Comp. Prod. Example 10 | Sulfuric Acid | 1,510 | 790 | 153 | 20 |
| Comp. Prod. Example 11 | Acetic Acid/ Methanol (1:1) | 1,420 | 870 | 254 | 25 |

The invention has been described in detail and with reference to specific embodiments thereof.

**Claims**

1. A process for the purification of an acetylene polymer which is in a powder form or in a lump form, comprising removing a polymerization catalyst from the polymer by contacting the acetylene polymer with an organic acid.

2. A process according to Claim 1 for the purification of an acetylene polymer, comprising removing a polymerization catalyst from the polymer by pulverizing the acetylene polymer with an organic acid.

3. The process of Claim 1, wherein the contacting of the organic acid and the acetylene polymer comprises washing the acetylene polymer with the organic acid under reflux while stirring the acetylene polymer.

4. The process of Claim 1 or 2, wherein, after contacting the polymer with the organic acid, the process includes treating the acetylene polymer with a solvent.

5. The process of Claim 1, 2 or 3, wherein the organic acid is (a) a mono- or multivalent organic carboxylic acid, (b) an acid anhydride or said organic carboxylic acid, (c) a hydroxycarboxylic acid or (d) a mixture thereof.

6. The process of Claim 1, 2 or 3, wherein the acetylene polymer contains repeating units of the formula

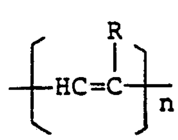

(A)

wherein R is a hydrogen atom, a halogen atom, an alkyl group containing 6 or less carbon atoms or an aryl group containing from 6 to 10 carbon atoms.

7. The process of Claim 5, wherein the organic acid is a mono- or multivalent carboxylic acid anhydride, a mono- or multivalent unsaturated acid, a mono- or multivalent aromatic acid, a mono- or multivalent saturated fatty acid, an aromatic sulfonic acid or oxalic acid or co-derivative thereof.

8. The process of Claim 4, wherein the solvent is an aromatic solvent, a halogenated compound solvent, an alcohol, a ketone, an aliphatic solvent, an alicyclic solvent, a sulfolane, a nitro compound, an ether compound, a cyano compound, an aromatic ether, an ester, a Cellosolve or an ethylene or propylene carbonate.

9. The process of Claim 1, wherein the contacting is for 10 hours or less.

10. The process of Claim 6, wherein the acetylene polymer is polyacetylene.

**Patentansprüche**

1. Verfahren zur Reinigung eines Acetylenpolymerisats in Form eines Pulvers oder von Klumpen, dadurch gekennzeichnet, daß man aus dem Polymerisat einen Polymerisationskatalysator entfernt, indem man das Acetylenpolymerisat mit einer organischen Säure in Berührung bringt.

2. Verfahren nach Anspruch 1 zur Reinigung eines Acetylenpolymerisats, dadurch gekennzeichnet, daß man aus dem Polymerisat einen Polymerisationskatalysator entfernt, indem man das Acetylenpolymerisat mit einer organischen Säure pulverisiert.

3. Verfahren nach Anspruch 1, dadurch gekennzeichnet, daß das Inberührungbringen der organischen Säure mit Acetylenpolymerisat darin besteht, daß man das Acetylenpolymerisat unter Rühren mit der organischen Säure bei Rückflußtemperatur wäscht.

4. Verfahren nach Ansprüchen 1 oder 2, dadurch gekennzeichnet, daß man das Acetylenpolymerisat nach dem Inberührungbringen des Polymerisats mit der organischen Säure mit einem Lösungsmittel behandelt.

5. Verfahren nach Ansprüchen 1, 2 oder 3, dadurch gekennzeichnet, daß man als organische Säure
(a) eine ein- oder mehrwertige organische Carbonsäure,
(b) ein Säureanhydrid dieser organischen Carbonsäure,
(c) eine Hydroxycarbonsäure oder
(d) eine Mischung hiervon verwendet.

6. Verfahren nach Ansprüchen 1, 2 oder 3, dadurch gekennzeichnet, daß das Acetylenpolymerisat wiederkehrende Einheiten der Formel

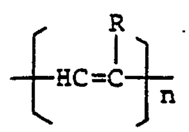

worin R für ein Wasserstoff- oder Halogenatom, eine Alkylgruppe mit 6 oder weniger Kohlenstoffatomen oder eine Arylgruppe mit 6—10 Kohlenstoffatomen steht, enthält.

7. Verfahren nach Anspruch 5, dadurch gekennzeichnet, daß man als organische Säure ein ein- oder mehrwertiges Carbonsäureanhydrid, eine ein- oder mehrwertige ungesättigte Säure, eine ein- oder mehrwertige aromatische Säure, eine ein- oder mehrwertige gesättigte Fettsäure, eine aromatische Sulfonsäure oder Oxalsäure oder ein gemeinsames Derivat hiervon verwendet.

8. Verfahren nach Anspruch 4, dadurch gekennzeichnet, daß man als Lösungsmittel ein aromatisches Lösungsmittel, ein aus einer halogenierten Verbindung bestehendes Lösungsmittel, einen Alkohol, ein Keton, ein aliphatisches Lösungsmittel, ein alicyclisches Lösungsmittel, ein Sulfolan, eine Nitroverbindung, eine Etherverbindung, eine Cyanoverbindung, einen aromatischen Ether, einen Ester, ein Ethylenglykolether-Lösungsmittel (Cellosolve) oder ein Ethylen- oder Propylencarbonat verwendet.

9. Verfahren nach Anspruch 1, dadurch gekennzeichnet, daß das Inberührungbringen 10 h oder weniger dauert.

10. Verfahren nach Anspruch 6, dadurch gekennzeichnet, daß das Acetylenpolymerisat aus Polyacetylen besteht.

**Revendications**

1. Procédé pour purifier un polymère de composé acétylénique, qui est sous forme de poudre ou sous forme de morceaux, comprenant l'enlèvement d'un catalyseur de polymérisation, que l'on sépare du polymère, en mettant le polymère de composé acétylénique en contact avec un acide organique.

2. Procédé selon la revendication 1 pour purifier un polymère d'un composé acétylénique, comprenant l'enlèvement d'un catalyseur de polymérisation que l'on sépare du polymère en broyant, pour le pulvériser, le polymère de composé acétylénique avec un acide organique.

3. Procédé selon la revendication 1, dans lequel la mise en contact de l'acide organique et du polymère de composé acétylénique comprend le lavage du polymère d'un composé acétylénique avec l'acide organique au reflux tout en agitant le polymère de composé acétylénique.

4. Procédé selon la revendication 1 ou 2 dans lequel, après avoir mis le polymère en contact avec

l'acide organique, le procédé comprend le traitement du polymère de composé acétylénique par un solvant.

5. Procédé selon la revendication 1, 2 ou 3, dans lequel l'acide organique est (a) un acide organique monocarboxylique ou polycarboxylique, (b) un anhydride dudit acide carboxylique organique, (c) un acide hydroxycarboxylique, ou (d) un de leurs mélanges.

6. Procédé selon la revendication 1, 2 ou 3, dans lequel le polymère de composé acétylénique contient des motifs répétés de formule

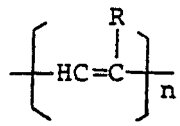

dans laquelle R représente un atome d'hydrogène, un atome d'halogène, un groupe alkyle contenant 6 atomes de carbone ou moins de 6 atomes de carbone, ou un groupe aryle contenant de 6 à 10 atomes de carbone.

7. Procédé selon la revendication 5, dans lequel l'acide organique est un anhydride d'acide monocarboxylique ou polycarboxylique, un acide insaturé monocarboxylique ou polycarboxylique, un acide aromatique monocarboxylique ou polycarboxylique, un acide gras saturé monocarboxylique ou polycarboxylique, un acid sulfonique aromatique ou de l'acide oxalique ou un de leurs co-dérivés.

8. Procédé selon la revendication 4, dans lequel le solvant est un solvant aromatique, un solvant halogéné, un alcool, une cétone, un solvant aliphatique, un solvant alicyclique, un "sulfolane", un composé nitré, un éther-oxyde, un composé cyané, un éther aromatique, un ester, un "Cellosolve" ou un carbonate d'éthylène ou de propylène.

9. Procédé selon la revendication 1, dans lequel l'opération de mise en contact dure 10 h ou moins de 10 h.

10. Procédé selon la revendication 6, dans lequel le polymère d'un composé acétylénique est du polyacétylène.

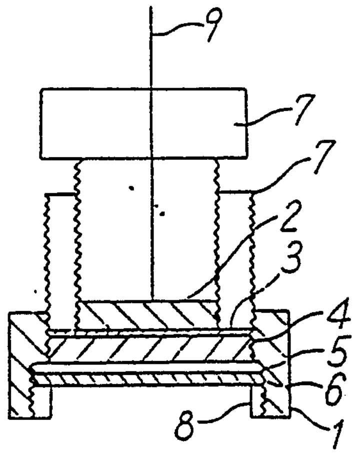
9
7
7
2
3
4
5
6
8
1